# EUROPÄISCHE PATENTSCHRIFT

(11) **EP 2 769 090 B1**
(45) Veröffentlichungstag und Bekanntmachung des Hinweises auf die Patenterteilung: **25.07.2018**
(21) Anmeldenummer: 12759699.7
(22) Anmeldetag: 14.09.2012
(51) Int. Cl.: F03D 80/70, F16C 19/16, F16C 41/00, H02K 7/09, H02K 7/18, F03D 7/02

(54) **LAGER UND WINDKRAFTANLAGE**
BEARING AND WIND TURBINE
PALIER ET ÉOLIENNE

(30) Priorität: 16.09.2011 DE 102011082810
(43) Veröffentlichungstag der Anmeldung: 27.08.2014
(73) Patentinhaber: Aktiebolaget SKF, 415 50 Göteborg (SE)
(72) Erfinder: ZIEGLER, Sebastian, NL-3512 KX Utrecht (NL); OHLSCHEWSKI, Armin, 97422 Schweinfurt (DE); DE VRIES, Alexander, NL-4003 KA Tiel (NL); VAN LEEUWEN, Bernardus Gerardus, NL-3522 AG Utrecht (NL); STUBENRAUCH, Arno, 97491 Aidhausen (DE)
(74) Vertreter: Kuhstrebe, Jochen
(86) Internationale Anmeldenummer: PCT/EP2012/068083
(87) Internationale Veröffentlichungsnummer: WO 2013/037949

(56) Entgegenhaltungen:
- EP-A2- 1 371 845
- WO-A2-2010/118918
- AU-A1- 2009 337 882
- US-A1- 2009 155 075

## Beschreibung

Ausführungsbeispiele beziehen sich auf ein Lager und eine Windkraftanlage.

Bei Windkraftanlagen wird eine Geschwindigkeit, mit der sich ein Rotor der betreffenden Windkraftanlage dreht, durch ein Verändern des Anstellwinkels eines oder mehrerer Rotorblätter des betreffenden Rotors der Windkraftanlage bewirkt. Der Anstellwinkel der betreffenden Rotorblätter kann hierbei derart eingestellt werden, dass es zu einem Strömungsabriss kommt, woraufhin eine Krafteinwirkung durch anströmende Luft auf den Rotor bzw. seine Rotorblätter abbricht. Hierdurch kann der Rotor beispielsweise auslaufen. Dieser Vorgang wird auch als aktiver Strömungsabriss (engl.: Active Stall) bezeichnet. Eine Änderung des Anstellwinkels bedeutet hierbei, dass die Rotorblätter entlang ihrer longitudinalen Achse gedreht werden, um der anströmenden Luft, also dem Wind oder Böen eine geringere Angriffsfläche zu bieten.

Bei Windkraftanlagen ist eine entsprechende Möglichkeit zur Änderung des Anstellwinkels der Rotorblätter häufig schon deshalb sinnvoll einzuplanen, um eine Ausgangsleistung des betreffenden Systems zu limitieren und das System gegen eine Überlastung zu schützen. Der Winkel, um den die Rotorblätter gedreht werden, um die Ausgangsleistung der Windkraftanlage zu steuern, liegt typischerweise im Bereich zwischen einigen wenigen Grad bis hin zu 25° oder darüber. In Notsituationen werden hingegen die Rotorblätter häufig um 90° gedreht, um den Rotor wie oben beschrieben, zu stoppen.

Eine Änderung des Anstellwinkels der Rotorblätter kann hierbei auf unterschiedlichem Wege erreicht werden. Im Falle eher kleinerer Windkraftwerke mit einer Ausgangsleistung von bis zu 300 kW, wobei typische Werte im Bereich von etwa 100 kW liegen, wird häufig auf mechanische Systeme zurückgegriffen, bei denen die Änderung des Anstellwinkels über Zentrifugalkräfte bewirkt wird. Im Falle mittlerer Windkraftanlagen, die typischerweise eine Ausgangsleistung im Bereich zwischen etwa 300 kW und 500 kW besitzen, werden hydraulische Systeme zur Einstellung des Anstellwinkels verwendet. Im Bereich größerer Windkraftanlagen, die typischerweise mehr als 500 kW Ausgangsleistung aufweisen, werden hierzu elektrische Systeme verwendet.

Elektrische Systeme zur Nachführung des Anstellwinkels eines Rotorblatts haben häufig den positiven Effekt, dass die Ausgangsleistung des Windkraftwerks genauer gesteuert und kontrolliert werden kann. Darüber hinaus kann auch die Gesamtlebensdauer der Komponenten einer Windkraftanlage gegebenenfalls erhöht werden, da Belastungsspitzen gegebenenfalls vermieden werden können. Auch weisen elektrische Systeme gegenüber hydraulischen den Vorteil auf, dass eine Gefahr eines Lecks der Hydraulikflüssigkeiten entfällt.

Neuere Windkraftanlagen mit einer Ausgangsleistung von mehr als 500 kW sind typischerweise mit elektrischen Systemen zur Einstellung bzw. Nachführung des Anstellwinkels der Rotorblätter ausgerüstet, da der Anstellwinkel der einzelnen Rotorblätter im Falle einer Windkraftanlage mit mehr als einem Rotorblatt einzeln über elektrische Motoren gesteuert werden können. Hierdurch kann Bauraum im Inneren des Rotorgehäuses eingespart werden.

In diesem Zusammenhang werden häufig zweireihige Großschrägkugellager als Anstellwinkellager (engl. Pitch Bearing) verwendet. Hierbei wird einer der Lagerringe mit einer Verzahnung ausgeführt, über die der elektrische Antrieb mit dem betreffenden Lagerring verbindbar ist. Hierbei wird häufig der Innenring mit dem entsprechenden Rotorblatts drehfest verbunden, sodass dieser die entsprechende Verzahnung an seiner Innenseite aufweist.

Zur Verstellung des Anstellwinkels der Rotorblätter wird häufig ein vergleichsweise hohes Drehmoment benötigt. Aus diesem Grund weisen die elektrischen Antriebe typischerweise ein einstufiges oder mehrstufiges Planetengetriebe oder auch ein Schneckengetriebe auf, welches zwischen dem elektrischen Motor und einem mit dem betreffenden Wälzlagerring in Eingriff stehendem Ritzel.
Die Herstellung eines Lagerrings mit einer entsprechenden Verzahnung stellt jedoch aufgrund der einzuhaltenden Toleranzen, der geforderten und einzuhaltenden Eigenschaften des Materials im Bereich der Verzahnung (z. B. Härte und Zähigkeit) und anderer Eigenschaften eine große Herausforderung dar. Die Herstellung der entsprechenden Verzahnung bei so großen Lagerringen stellt daher einen typischerweise teuren Prozess dar.
Die AU 2009 337 882 A1 bezieht sich auf eine Anstellwinkelantriebsmaschine für eine Windenergieanlage und Windgeneratoren. Die WO 2010/118978 A1 bezieht sich auf eine Windenergieanlage und eine Antriebseinrichtung zur Verstellung eines Rotorblatts.
Es besteht so ein Bedarf daran, ein Lager zum Einstellen eines Anstellwinkels für ein Rotorblatt einer Windkraftanlage zu schaffen, welches eine einfachere Herstellung ermöglicht.
Diesem Bedarf tragen ein Lager gemäß Patentanspruch 1 und eine Windkraftanlage gemäß Patentanspruch 9 Rechnung.
Ein Lager zum Einstellen eines Anstellwinkels eines Rotorblatts einer Windkraftanlage gemäß einem Ausführungsbeispiel umfasst einen ersten Lagerring und einen zweiten Lagerring, wobei der erste und der zweite Lagerring zueinander drehbar sind, wobei der erste Lagerring als Translator eines Linearmotors eine Mehrzahl von entlang eines Teils seines Umfangs benachbart zueinander angeordneten Magnetfeldquellen umfasst, und wobei die Magnetfeldquellen so ausgebildet sind, dass jeweils zwei benachbart zueinander angeordnete Magnetfeldquellen ein Magnetfeld mit alternierender Polarität erzeugen. Die Mehrzahl von Magnetfeldquellen ist in einem vorbestimmten Winkelbereich bezogen auf einen Mittelpunkt des ersten Lagerrings entlang seines Umfangs angeordnet, an den sich unmittelbar ein weiterer vorbestimmter Winkelbereich anschließt, in dem keine Magnetfeldquellen angeordnet sind, wobei der zweite Lagerring als Stator des Linearmotors eine Gruppe von wenigstens zwei entlang eines Teils seines Umfangs benachbart zueinander angeordneten Spulen umfasst, wobei die Spulen (170) der Gruppe (190) von Spulen (170) auf einem gemeinsamen Joch (140) angeordnet sind. Eine Windkraftanlage gemäß einem Ausführungsbeispiel umfasst einen Rotor und ein Rotorblatt sowie ein Lager gemäß einem Ausführungsbeispiel, das zwischen dem Rotor und dem Rotorblatt so angeordnet ist, dass das Rotorblatt mit dem ersten Lagerring und der Rotor mit dem zweiten Lagerring jeweils mechanisch verdrehfest miteinander verbunden sind, um eine Änderung eines Anstellwinkels des Rotorblatts zu ermöglichen.

Einem Ausführungsbeispiel eines Lagers und einer Windkraftanlage liegt so die Erkenntnis zu Grunde, dass durch den Einsatz eines Linearmotors, der unmittelbar als Teil des ersten und des zweiten Lagerrings ausgeführt ist, die Notwendigkeit zur Implementierung einer Verzahnung an den Lagerringen entfallen kann. Der konventionelle elektrische Motor mit einem entsprechenden Getriebe wird durch einen Direktantriebsmotor ersetzt. Dieser kann nicht nur eine hinreichend hohes Drehmoment und eine gute Steuerbarkeit bzw. Kontrollierbarkeit ermöglichen, er kann vielmehr auch den Einsatz eines Getriebes und eines damit verbundenen Spiels überflüssig machen.

Auch kann durch die fehlende Implementierung eines Getriebes ein gegebenenfalls über die Zeit auftretender Zahnverschleiß vermieden werden. Dieser kann bei Implementierung eines auf Zahnrädern basierenden Getriebes auftreten und dazu führen, dass die genaue Einstellbarkeit nicht mehr gewährleistet werden kann. In einem solchen Fall ist häufig bei einem konventionellen Lager ein sehr kostenintensiver Austausch notwendig, der durch den Einsatz eines Lagers gemäß einem Ausführungsbeispiel gegebenenfalls eingespart werden kann.

Ebenso kann durch den Einsatz eines Lagers gemäß einem Ausführungsbeispiel Bauraum in einem Inneren der Windkraftanlage, beispielsweise in einem Inneren des Rotorgehäuses, eingespart werden, da die zusätzlichen mechanischen Komponenten, insbesondere ein entsprechendes Getriebe entfallen können.

Ein Lager gemäß einem Ausführungsbeispiel kann als Wälzlager ausgeführt werden, welches eine Mehrzahl von Wälzkörpern aufweist, die zwischen dem ersten Lagerring und dem zweiten Lagerring angeordnet sind und mit Laufbahnen des ersten und des zweiten Lagerrings in Kontakt stehen. So kann es sich bei dem Lager beispielsweise um ein einreihiges oder ein mehrreihiges, beispielsweise ein zweireihiges Vierpunktlager handeln.

Bei anderen Ausführungsbeispielen kann es sich bei dem Lager jedoch ebenso um ein Gleitlager handeln. Unabhängig von dem implementierten Lagertypen kann ein Lager gemäß einem Ausführungsbeispiel ferner ein Schmiermittelsystem als optionale Komponente aufweisen.

Die Spulen der Gruppe von Spulen und die Magnetfeldquellen der Mehrzahl von Magnetfeldquellen sind häufig bei einem Ausführungsbeispiel eines Lagers der Art angeordnet, dass diese einander zugewandt sind. Hierdurch kann eine ein Kopplung oder Wechselwirkung des magnetischen Feldes bzw. des magnetischen Flusses von den Magnetfeldquellen mit den Spulen gegebenenfalls dadurch verbessert werden, dass der Abstand zwischen diesen reduziert wird.

Auch können bei einem Ausführungsbeispiel benachbarte Spulen der Gruppe von Spulen eine übereinstimmende Wicklungsorientierung aufweisen. In einem solchen Fall können alle Spulen der Gruppe von Spulen die gemeinsame Wicklungsorientierung aufweisen. Bei anderen Ausführungsbeispielen kann jedoch auch eine alternierende Wicklungsorientierung benachbarter Spulen implementierbar sein. Die Spulen können unabhängig hiervon in Serie oder parallel geschaltet werden.

Bei einem Lager gemäß einem Ausführungsbeispiel kann der vorbestimmte Winkelbereich wenigstens 75° umfassen. Hierdurch kann es möglich sein, den Anstellwinkel des Rotorblatts nicht nur zur Regelung der Ausgangsleistung zu verwenden, sondern der Anstellwinkels des Rotorblatts kann gegebenenfalls auch im Falle eines Vorliegens einer Notsituation soweit verdreht werden, dass eine Wahrscheinlichkeit für ein Auftreten eines signifikanten Schadens an der Windkraftanlage aufgrund starker Winde reduziert werden kann. Bei anderen Ausführungsbeispielen kann das Lager derart ausgebildet sein, dass der vorbestimmte Winkelbereich wenigstens 90° umfasst, um ein weiteres Drehen des Rotorblatts, also eine größere Änderung seines Anstellwinkels zu ermöglichen, um die Gefahr einer Beschädigung weiter zu reduzieren.

Bei einem Lager gemäß einem Ausführungsbeispiel kann der vorbestimmte Winkelbereich einen Winkelbereich umfassen, der einer Summe von wenigstens 90°, beispielsweise 100° oder 120°, und einem kleinsten Winkelbereich entspricht, in dem die Gruppe von Spulen bezogen auf einen Mittelpunkt des zweiten Lagerrings angeordnet ist. Hierdurch kann gegebenenfalls eine Verdrehung des Rotorblatts, also eine Anpassung seines Anstellwinkels um wenigstens 90° garantiert werden, sodass dieses vollständig "aus dem Wind" gedreht werden kann, um die zuvor genannten Beschädigungen durch das Auftreten von Böen oder Winden zu reduzieren oder vollständig zu vermeiden.

Bei einem Lager gemäß einem Ausführungsbeispiel kann der weitere vorbestimmte Winkelbereich wenigstens einem Einfachen eines kleinsten Winkelbereichs entsprechen, in dem die Gruppe von Spulen bezogen auf einen Mittelpunkt des zweiten Lagerrings angeordnet ist. Bei anderen Ausführungsbeispielen kann der weitere vorbestimmte Winkelbereich auch ein Mehrfaches, beispielsweise ein Zweifaches oder ein Dreifaches des vorbestimmten Winkelbereich umfassen. So ermöglicht der Einsatz eines Linearmotors gerade eine im Vergleich zu einem konventionellen Elektromotor sparsame Implementierung notwendiger Magnetfeldquellen. Hierdurch kann nicht nur der finanzielle Aufwand zur Herstellung eines Lagers gemäß einem Ausführungsbeispiel reduziert werden, die Herstellung kann gegebenenfalls vereinfacht werden.

Bei einem Lager gemäß einem Ausführungsbeispiel kann die Gruppe von Spulen derart angeordnet sein, dass ein Verhältnis eines Winkels, unter dem zwei benachbarte Spulen der Gruppe von Spulen bezogen auf einen Mittelpunkt des zweiten Lagerrings angeordnet sind, zu einem weiteren Winkel, unter dem zwei benachbarte Magnetfeldquellen bezogen auf einen Mittelpunkt des ersten Lagerrings angeordnet sind, zwischen 0,6 und 0,95 oder zwischen 1,05 und 1,4 liegt. Hierdurch kann eine kompakte Bauweise des Linearmotors umgesetzt werden und/oder eine Drehmomententwicklung und/oder ein Ansprechverhalten des Linearmotors gegebenenfalls verbessert werden. Bei anderen Ausführungsbeispielen kann das oben genannte Verhältnis beispielsweise auch im Bereich zwischen 0,8 und 0,95 bzw. zwischen 1,05 und 1,25, oder aber auch zwischen 0,85 und 0,95 bzw. zwischen 1,05 und 1,15 liegen. Hierdurch kann gegebenenfalls der benötigte Bauraum effizienter genutzt werden und/oder das Ansprechverhalten und/oder die Drehmomententwicklung weiter verbessert werden.

Bei einem Lager gemäß einem Ausführungsbeispiel kann die Gruppe von Spulen bezogen auf einen Mittelpunkt des zweiten Lagerrings in einem Winkelbereich von höchstens 30° angeordnet sein. Hierdurch kann es möglich sein, den Einsatz von Magnetfeldquellen räumlich weiter zu beschränken und/oder den möglichen Verfahren Weg des Linearmotors weiter zu steigern. So kann gegebenenfalls eine einfachere und/oder kostengünstigere Herstellung eines Lagers gemäß einem Ausführungsbeispiel ermöglicht werden.

Bei einem solchen Lager gemäß einem Ausführungsbeispiel kann sich an den Winkelbereich unmittelbar ein weiterer Winkelbereich anschließen, in dem an dem zweiten Lagerring keine Spulen angeordnet sind, und der wenigstens 30° umfasst. Bei anderen Ausführungsbeispielen kann der weitere Winkelbereich wenigstens 45°, wenigstens 75°, wenigstens 90°, wenigstens 100°oder wenigstens 120° umfassen. So kann gegebenenfalls bei einem Ausführungsbeispiel jeder Mehrzahl von Magnetfeldsensoren genau eine Gruppe von Spulen zugeordnet sein.

Bei einem Lager gemäß Anspruch 1 sind die Spulen einer Gruppe von Spulen auf einem gemeinsamen Joch angeordnet sein. Hierdurch kann gegebenenfalls eine Effizienz des Linearmotors und damit gegebenenfalls das erzielbare Drehmoment verbessert werden.
Bei einem solchen Lager gemäß einem Ausführungsbeispiel können auf dem gemeinsamen Joch nur die Spulen der Gruppe von Spulen, also die Spulen genau einer einzigen Gruppe von Spulen angeordnet sein. Bei einem solchen Lager sind auf dem gemeinsamen Joch nur die Spulen genau der Gruppe von Spulen angeordnet. Hierdurch kann gegebenenfalls eine Effizienz des Linearmotors weiter gesteigert werden, da eine Beeinträchtigung oder Überlagerung mit Magnetfeldern anderer Spulen gegebenenfalls vermieden werden kann.
Das gemeinsame Joch kann hierbei beispielsweise aus einem weichmagnetischen Material gefertigt werden. Hierdurch kann gegebenenfalls eine weitere Effizienzsteigerung des Linearmotors durch eine bessere Führung der magnetischen Feldlinien möglich sein.
Ein Lager gemäß einem Ausführungsbeispiel kann eine, beispielsweise regelmäßig, entlang des ersten Lagerrings angeordnete Mehrzahl von Gruppen von Spulen aufweisen, wobei jeweils zwischen zwei benachbarten Gruppen von Spulen in einem Winkelbereich von wenigstens 30° entlang des Umfangs des zweiten Lagerrings keine Spulen angeordnet sind. Wer erste Lagerring kann dann eine weitere Mehrzahl von entlang eines Teils seines Umfangs benachbart zueinander angeordneten Magnetfeldquellen umfassen, wobei die Magnetfeldquellen der weiteren Mehrzahl von Magnetfeldquellen so ausgebildet sind, dass jeweils zwei benachbart zueinander angeordnete Magnetfeldquellen ein Magnetfeld mit alternierender Polarität erzeugen. Hierdurch kann gegebenenfalls eine weitere Steigerung des Drehmoments des Linearmotors erzielt werden, indem eine zweite Gruppe von Spulen und eine entsprechende weiteren Mehrzahl von Magnetfeldquellen, also ein weiterer Linearmotor vorgesehen werden.

Bei einem solchen Ausführungsbeispiel kann es gegebenenfalls aufgrund eines wenigstens zu garantierenden Verfahrweges des Linearmotors, also eines minimalen Änderungsbereich des Anstellwinkels des Rotorblatts von beispielsweise 90° oder darüber ratsam oder notwendig sein, höchstens drei Gruppen von Spulen oder aber höchstens zwei Gruppen von Spulen implementieren.

Bei einem Lager gemäß einem Ausführungsbeispiel können die Magnetfeldquellen der Mehrzahl von Magnetfeldquellen jeweils einen Dauermagneten, beispielsweise einen NdFeB-Permanentmagneten, oder eine Spule umfassen. Hierdurch kann im Falle der Verwendung eines Permanentmagneten oder einen Dauermagneten eine einfachere Herstellung eines Lagers ermöglicht werden, da eine elektrische Kontaktierung der Magnetfeldquellen dann gegebenenfalls entfallen kann. Im Falle der Verwendung einer Spule als Magnetfeldquellen kann gegebenenfalls eine bessere an Steuerbarkeit des Linearmotors erzielbar sein. Eine Führung der elektrischen Kabel zur Kontaktierung der Spulen ist in diesem Fall häufig unproblematisch, da ein maximaler Drehwinkel, um dem das Lager schwenkbar sein muss, typischerweise deutlich weniger als 360° beträgt. Darüber hinaus kann auch eine Kombination der beiden zuvor genannten Optionen möglich sein, bei der die Spulen zur Verstärkung des durch die Permanentmagneten erzeugten Magnetfeldes verwendet werden.

Bei einem Lager gemäß einem Ausführungsbeispiel können die Magnetfeldquellen gegebenenfalls ein weichmagnetisches Material zur Führung der Magnetfeldlinien umfassen. Hierdurch kann gegebenenfalls eine genauere Anpassung der Magnetfeldquellen an die Geometrie des Lagers erfolgen, wodurch gegebenenfalls ein Wirkungsgrad des Linearmotors gesteigert werden kann.

Bei einem Lager gemäß einem Ausführungsbeispiel kann der erste Lagerring ein Innenring des Lagers und der zweite Lagerring ein Außenring des Lagers sein. Diese Konfiguration stellt die häufig bei Windkraftanlagen verwendete Konfiguration dar. Selbstverständlich kann bei anderen Ausführungsbeispielen auch der erste Lagerring der Außenring des Lagers sein, während der zweite Lagerring der Innenring des Lagers ist.

Darüber hinaus besteht selbstverständlich die Möglichkeit, ein Lager gemäß einem Ausführungsbeispiel auch so einzusetzen, dass einer der beiden oder beide Lagerringe, also der erste und der zweite Lagerring, bezüglich eines weiteren Bauteils rotatorische oder translatorische Bewegung ausführen. Die Verwendung der Begriffe "Stator" und "Translator" spiegeln in diesem Zusammenhang lediglich die Verwendung der üblichen Terminologie im Zusammenhang mit Linearmotoren wieder, sondern jedoch - insbesondere im Hinblick auf die Verwendung des Begriffs "Stator" - keine Festlegung auf eine ortsfeste Anordnung des betreffenden Lagerrings andeuten. So kann gegebenenfalls ein Lagerring gemäß einem Ausführungsbeispiel auch so verwendet werden, dass der zweite Lagerring als sich drehend angesehen wird.

Unter einem Mittelpunkt eines Lagerrings wird in diesem Zusammenhang ein (beliebiger) Punkt auf eine Achse des Lagers, einer Drehachse des Lagers, einer Symmetrieachse oder einer Rotationsachse des betreffenden Lagerrings verstanden.

Unter einem Winkel oder Winkelbereich wird im Rahmen der vorliegenden Beschreibung ferner ein solcher verstanden, der einen kleinsten Winkel oder ein kleinster Winkelbereich darstellt, sofern sich nicht aus dem Zusammenhang oder durch explizite Nennung etwas anderes ergibt. Schließen so beispielsweise Gruppen oder andere Objekte einen Winkel ein oder sind in einem Winkelbereich angeordnet, so wird jeweils unter dem Winkel bzw. Winkelbereich der zahlenmäßig kleinste Wert des entsprechenden Winkels oder Winkelbereich verstanden. Vielfache von 360° werden im Allgemeinen ebenso wenig berücksichtigt, wie entsprechend größere Winkel, die gegebenenfalls einander schneidende Geraden, Ebenen oder andere geometrische Objekte miteinander einschließen.

Benachbart sind hierbei zwei Objekte, zwischen denen kein weiteres Objekt desselben Typs angeordnet ist. Unmittelbar benachbart sind entsprechende Objekte, wenn sie aneinander grenzen, also beispielsweise miteinander in Kontakt stehen.

Eine kraftschlüssige Verbindung kommt durch Haftreibung, eine stoffschlüssige Verbindung durch molekulare oder atomare Wechselwirkungen und Kräfte und eine formschlüssige Verbindung durch geometrische Verbindung der betreffenden Verbindungspartner zustande. Die Haftreibung setzt somit insbesondere eine Normalkraftkomponente zwischen den beiden Verbindungspartnern voraus.

Wie bereits oben beschrieben wurde, können Lager gemäß einem Ausführungsbeispiel beispielsweise im Zusammenhang mit einer Windkraftanlage verwendet werden. Sie können daher als Großlager, Großwälzlager oder Großgleitlager implementiert werden. Aufgrund ihres typischerweise auf weniger als 360° beschränkten Schwenkbereichs werden sie auch als Schwenklager bezeichnet.

Nachfolgend werden unter Bezugnahme auf die beigefügten Figuren Ausführungsbeispiele näher beschrieben.
Fig. 1 zeigt eine schematische Darstellung eines Linearmotors;
Fig. 2 zeigt eine Querschnittsdarstellung durch ein Lager gemäß einem Ausführungsbeispiel;
Fig. 3 illustriert zwei unter einem Winkel benachbart angeordnete Objekte;
Fig. 4 zeigt eine schematische Aufsicht auf ein Lager gemäß einem Ausführungsbeispiel; und
Fig. 5 zeigt eine schematische Aufsicht auf ein weiteres Lager gemäß einem Ausführungsbeispiel.

Im Rahmen der vorliegenden Beschreibung werden zusammenfassende Bezugszeichen für Objekte, Strukturen und andere Komponenten verwendet werden, wenn die betreffende Komponente an sich oder mehrerer entsprechende Komponenten innerhalb eines Ausführungsbeispiels oder innerhalb mehrerer Ausführungsbeispiele beschrieben werden. Passagen der Beschreibung, die sich auf eine Komponente beziehen, sind daher auch auf andere Komponenten in anderen Ausführungsbeispielen übertragbar, soweit dies nicht explizit ausgeschlossen ist oder sich dies aus dem Zusammenhang ergibt. Werden einzelne Komponenten bezeichnet, werden individuelle Bezugszeichen verwendet, die auf den entsprechenden zusammenfassenden Bezugszeichen basieren. Bei der nachfolgenden Beschreibung von Ausführungsformen bezeichnen daher gleiche Bezugszeichen gleiche oder vergleichbare Komponenten.

Komponenten, die mehrfach in einem Ausführungsbeispiel oder in unterschiedlichen Ausführungsbeispielen auftreten, können hierbei bezüglich einiger ihrer technischen Parameter identisch und/oder unterschiedlich ausgeführt oder implementiert werden. Es ist so beispielsweise möglich, dass mehrere Komponenten innerhalb eines Ausführungsbeispiels bezüglich eines Parameters identisch, bezüglich eines anderen Parameters jedoch unterschiedlich ausgeführt sein können.

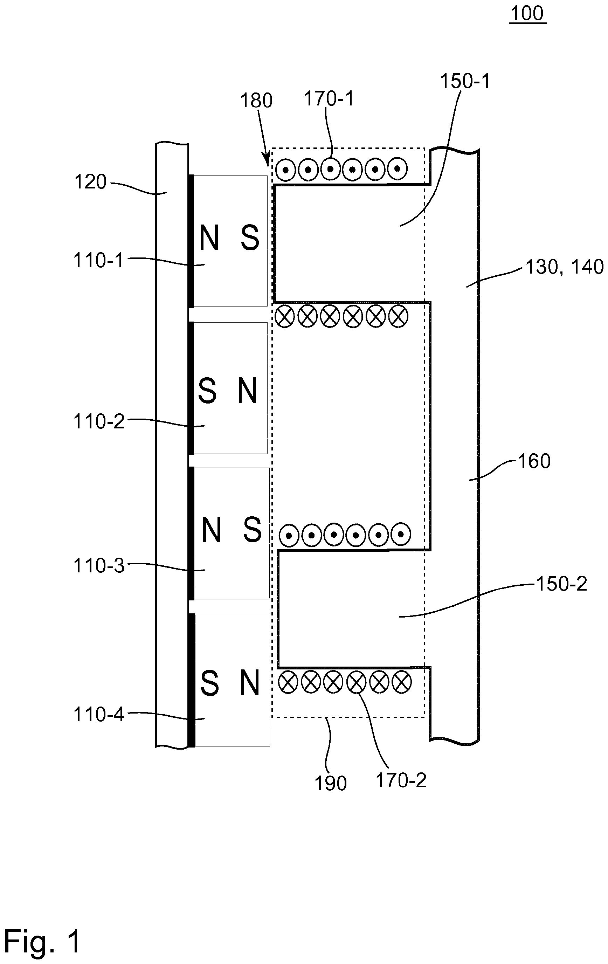

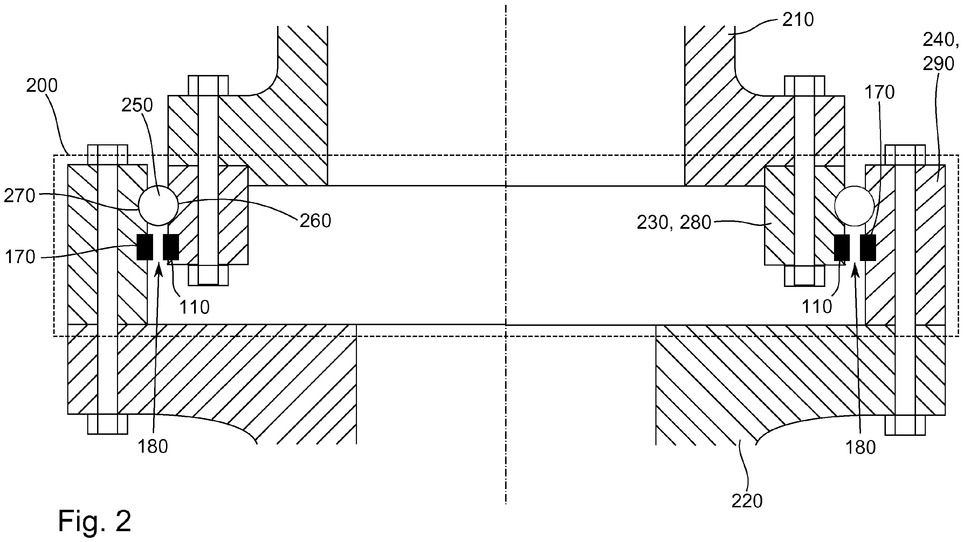

Bevor im Zusammenhang mit den Fig. 2 bis 5 Ausführungsbeispiele eines Lagers und einer Windkraftanlage beschrieben werden, wird zunächst ein Linearmotor in seiner grundsätzlichen Ausgestaltung beschrieben. So zeigt Fig. 1 schematisch einen Aufbau eines Linearmotors 100, wie er beispielsweise im Rahmen eines Lagers gemäß einem Ausführungsbeispiel zum Einsatz kommen kann. Der Linearmotors 100 weist eine Mehrzahl von Magnetfeldquellen 110 auf, die entlang eines Bauteils 120 der Art benachbart zueinander angeordnet oder ausgebildet sind, dass benachbarte Magnetfeldquellen 110 eine alternierender Polarität hinsichtlich ihres magnetischen Feldes oder ihres magnetischen Flusses erzeugen bzw. bereitstellen.

So ist in Fig. 1 zur Vereinfachung der Darstellung ein Linearmotor bzw. ein Ausschnitt eines Linearmotors 100 gezeigt, der vier Magnetfeldquellen 110-1, ..., 110-4 umfasst. Wie auch in Fig. 1 durch die Bezeichnung ihrer Polaritäten ("N" für Nordpol und "S" für Südpol) dargestellt ist, erzeugen jeweils zwei zueinander benachbarte Magnetfeldquellen, beispielsweise die Magnetfeldquellen 110-1 und 110-2, entsprechend magnetische Felder mit unterschiedlicher Polarität. Gleiches gilt ebenso für die weiteren in Fig. 1 gezeigten Magnetfeldquellen 110.

Die Magnetfeldquellen 110 sind mit dem Bauteil 120 mechanisch verbunden. Dies kann beispielsweise durch eine stoffschlüssigen, eine kraftschlüssige, eine formschlüssige Verbindung oder auch durch eine Kombination derselben geschehen. So können diese gegebenenfalls verklebt oder verschraubt werden. Je nach konkreter Implementierung kann das Bauteil 120 beispielsweise ein weichmagnetisches Material umfassen oder auch aus diesem gefertigt sein, um eine Führung der magnetischen Feldlinien der Magnetfeldquellen 110 in seinem Inneren zu ermöglichen.

Der Linearmotors 100 umfasst ferner eine weitere Bauteil 130, bei dem es sich beispielsweise um ein Joch 140 handeln kann. Das Joch 140 umfasst wenigstens einen Abschnitt 150, der sich über einen Basisabschnitt 160 des Joch 140 erhebt. Auf dem wenigstens einen Abschnitt 150 ist eine Spule 170 angeordnet, die über entsprechende, nicht in Fig. 1 gezeigten Zuleitungen mit einem elektrischen Strom beaufschlagt werden kann.

So zeigt Fig. 1 einen Linearmotor 100 bzw. einen Abschnitt desselben, der zwei Abschnitte 150-1, 150-2 und entsprechend zwei Spulen 170-1, 170-2 umfasst. Fig. 1 zeigt hierbei die Wicklungen der Spulen 170 und ihrer Wicklungsorientierung an, indem sie die Richtung des Stromflusses in den Wicklungen der Spulen 170 im Falle einer Beauftragung mit einem Strom darstellt. Zwei benachbarte Spulen, also beispielsweise die Spulen 170-1 und 170-2, weisen hierbei eine identische Wicklungenorientierung auf. Die Spulen 170 können parallel oder auch in Serie geschaltet sein.

Die Spulen 170 und die Magnetfeldquellen 110 sind hierbei der Art angeordnet, dass zwischen diesen ein Spalt 180 vorliegt, durch den die von den Magnetfeldquellen 110 erzeugten Magnetfeldlinien in die Spule 170 bzw. das Joch 140 eindringen. Auch das Joch 140 kann selbstverständlich aus einem weichmagnetischen Material gefertigt sein oder dieses zumindest umfassen, um eine Führung der magnetischen Feldlinien in seinem Inneren zu ermöglichen. Der Spalt 180 bestimmt durch seine Ausdehnung nicht zuletzt eine Kopplungsstarke, mit der sie Magnetfeldlinien der Magnetfeldquellen 110 in die Spulen 170 einkoppeln. Dieser sollte entsprechend möglichst gering ausgelegt sein, jedoch so groß sein, dass auch im Falle von Erschütterungen und anderen mechanischen Beeinflussungen eine Kollision oder eine Berührung der Spulen 170 und der Magnetfeldquellen 110 unterbunden wird.

Die Magnetfeldquellen 110 können grundsätzlich auf Basis von Permanentmagneten bzw. Dauermagneten oder aber auch auf Basis von Spulen realisiert werden. Im ersten Fall können die Magnetfeldquellen 110 beispielsweise auf Basis eines Neodym-Eisen-Bor-Magneten (NdFeB-Magneten) implementiert werden. Selbstverständlich können aber auch andere Dauermagneten Einsatz kommen. Darüber hinaus können selbstverständlich die Magnetfeldquellen 110 ebenso auf Basis von Spulen realisiert werden. Während zur Erzeugung der alternierender Polarität bei der Verwendung von Permanentmagneten diese entsprechend orientiert mit dem Bauteil 120 mechanisch verbunden werden, kann im Falle einer Implementierung auf Basis von Spulen über eine Verschaltung und/oder eine alternierende Wicklungsorientierung die alternierender Polarität benachbarter Magnetfeldquellen 110 realisiert werden. Selbstverständlich können auch Kombinationen eines Permanentmagneten und einer Spule im Rahmen der Magnetfeldquellen 110 implementiert werden. So kann gegebenenfalls durch den Einsatz einer zusätzlichen Spule das Magnetfeld des Permanentmagneten erhöht werden.

Unabhängig hiervon können die Magnetfeldquellen 110 und/oder Bauteil 120 ein weichmagnetisches Material zur Führung der Feldlinien der Magnetfeldquellen 110 umfassen hierdurch kann gegebenenfalls eine bessere Anpassung der Magnetfeldquellen 110 an die Geometrie des Linearmotors 100 erzielbar sein.

Ein Linearmotor 100 stellt eine elektrische Antriebsmaschine dar, die im Gegensatz zu den verbreiteten rotierenden Maschinen ein mit ihm verbundenes Objekte nicht in eine drehende, sondern in eine im Wesentlichen geradlinige Bewegung (Translationsbewegung) versetzt. Dabei ist grundsätzlich entweder eine asynchrone - das Magnetfeld ist nicht fest mit der Bewegung gekoppelte - oder eine synchrone Arbeitsweise - zum Beispiel beim Linearschrittmotor - möglich.

Ein Linearmotor 100 folgt demselben Funktionsprinzip wie ein Drehstrommotor, wobei die ursprünglich kreisförmig angeordneten elektrischen Erregerwicklungen (Stator) auf einer ebenen Strecke angeordnet sind. Der "Läufer" oder Translator, der dem Rotor des Drehstrommotors entspricht, wird beim Linearmotor von dem längs bewegten Magnetfeld über die Verfahrstrecke gezogen. Daher rührt auch die vielfach verwendete Bezeichnung Wanderfeldmaschine. Einem Linearmotor 100 kann so als abgerollte Version eines Rotations-Elektromotors angesehen werden. Erzeugt eine lineare Kraft entlang seiner Erstreckung oder Länge.

Ein Linearmotor ist dabei nicht auf gerade Bahnen im Sinne auf eine mathematische Gerade oder einen Geradenabschnitt beschränkt. Linearmotoren 100 können vielmehr auch für Bewegungen entlang einer gekrümmten Bahn oder Linie verwendet und entsprechend in gekurvter Form ausgeführt werden.

Linearmotoren 100 können es ermöglichen, direkt eine translatorische Bewegung darzustellen. Sie ermöglichen so den Bau von Direktantrieben, bei denen eine Unter- oder Übersetzung entfallen kann. Linearmotoren haben in diesem Bereich den Vorteil hoher Beschleunigungen und entsprechend hoher Kräfte bzw. Drehmomente. Auch können sie gegebenenfalls hohe Verfahrgeschwindigkeiten erreichen oder erzeugen.

Linearmotoren 100 können sowohl auf Basis konventioneller Leiter als auch auf Basis von Supraleitern implementiert werden. Im letzteren Fall kann das Vorsehen einer entsprechenden Kühlung ratsam sein, um den supraleitenden Zustand der betreffenden Komponenten zu erreichen.

Bei dem in Fig. 1 gezeigten Linearmotor 100 sind die Spulen 170 in Form einer Gruppe 190 angeordnet, wobei jede Gruppe 190 wenigstens zwei Spulen 170 umfasst.

Fig. 2 zeigt eine Querschnittsdarstellung durch eine Windkraftanlage gemäß einem Ausführungsbeispiel mit einem Lager 200 gemäß einem Ausführungsbeispiel. Eine Windkraftanlage gemäß einem Ausführungsbeispiel umfasst einen Rotor 210 sowie wenigstens ein Rotorblatt 220, von denen in Fig. 2 ihre jeweiligen Befestigungsstrukturen gezeigt sind, mit denen diese mit dem Lager 200 zum Einstellen eines Anstellwinkels des Rotorblatts 220 verbunden sind. Der Rotor 210 stellt in diesem Zusammenhang das "stationäre Bauteil", das Rotorblatt 220 das "bewegliche Bauteil" dar, da das Rotorblatt 220 hinsichtlich seines Anstellwinkels zu dem Rotor 210 durch das Lager 200 einstellbar ausgeführt wird.

Das Lager 200 gemäß einem Ausführungsbeispiel ist hierbei als Wälzlager, genauer gesagt als Kugellager ausgeführt. Es umfasst so einen ersten Lagerring 230 und einen zweiten Lagerring 240 zwischen denen eine Mehrzahl von Wälzkörpern 250 angeordnet sind. Die Wälzkörper 250 laufen hierbei auf Laufbahnen 260, 270 der beiden Lagerringe 230, 240 ab.

Der erste Lagerring 230, der im vorliegenden Ausführungsbeispiel als Innenring 280 ausgeführt ist, ist hierbei über entsprechende Bohrungen mit dem Rotor 210 verschraubt und so verdrehfest verbunden. Der zweite Lagerring 240, der in dem in Fig. 2 gezeigten Ausführungsbeispiel als Außenring 290 ausgeführt ist, weist ebenfalls entsprechende Bohrungen auf, um mit dem Rotorblatt 220 verschraubbar zu sein, um so eine verdrehfeste Verbindung mit diesem zu schaffen. Sowohl der Rotor 210 als auch der Rotorblatts 220 können selbstverständlich mehrteilig ausgeführt sein, sodass in Fig. 2 beispielsweise lediglich entsprechende Befestigungsstrukturen zur Verbindung mit dem Lager 200 gemäß einem Ausführungsbeispiel dargestellt sind. Selbstverständlich können bei anderen Ausführungsbeispielen der Rotor 210 und das Rotorblatt 220 auch mithilfe anderer Verbindungstechniken mit den entsprechenden Lagerringen 230, 240 des Lagers 200 verbunden werden.

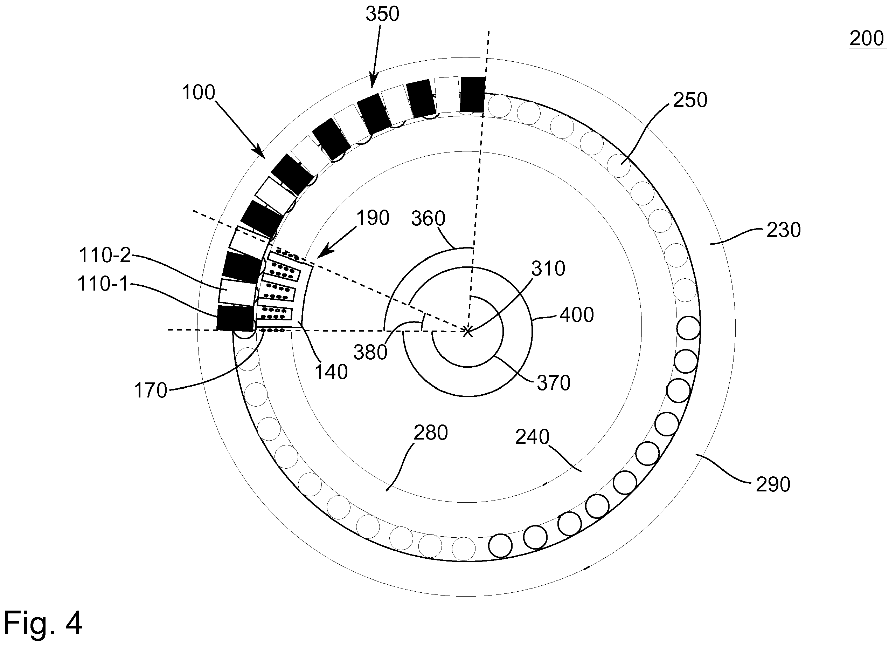

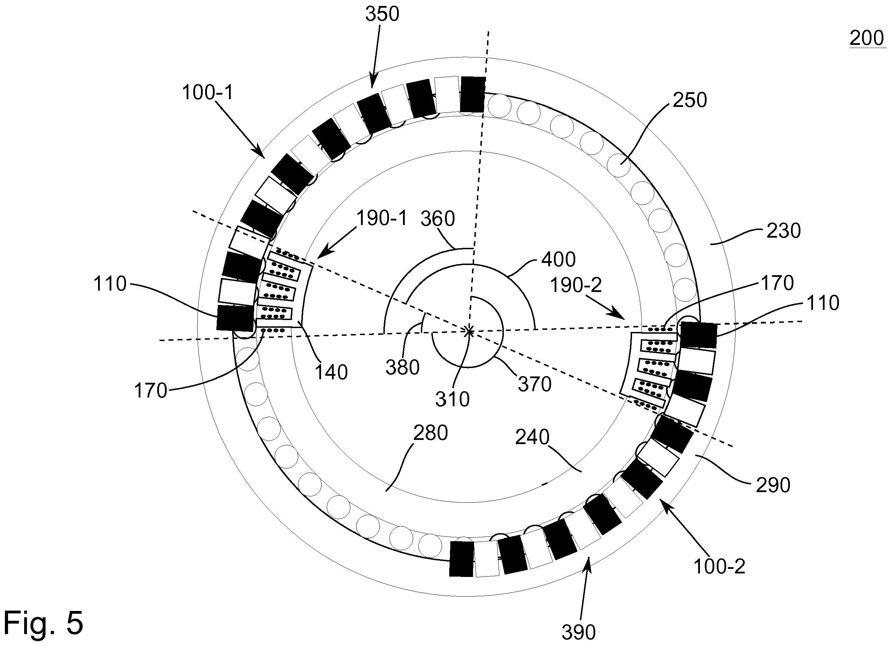

Der erste Lagerring 230 ist als Translator eines Linearmotors ausgebildet und umfasst so eine Mehrzahl von entlang wenigstens eines Teils seines Umfangs benachbart zueinander angeordneten Magnetfeldquellen 110. Die Magnetfeldquellen 110 sind hierbei derart ausgebildet, dass jeweils zwei benachbart zueinander angeordnete Magnetfeldquellen 110 ein Magnetfeld bzw. einem magnetischen Fluss mit alternierender Polarität erzeugen. Wie nachfolgend im Zusammenhang mit den Fig. 4 und 5 noch näher erläutert wird, ist die Mehrzahl von Magnetfeldquellen 110 hierbei in einem vorbestimmten Winkelbereich bezogen auf einen Mittelpunkt des ersten Lagerrings bei 130 entlang seines Umfangs angeordnet, an den sich unmittelbar ein weiterer vorbestimmter Winkelbereich anschließt, in dem keine Magnetfeldquellen angeordnet sind.

Der zweite Lagerring 240 ist als Stator eines Linearmotors ausgebildet und umfasst entsprechend eine Gruppe 190 (nicht gezeigte in Fig. 2) von wenigstens zwei entlang wenigstens eines Teils seines Umfangs benachbart zueinander angeordneten Spulen 170. Zwischen den Magnetfeldquellen 110 und den Spulen 170 bilden sich entsprechende Spalte 180 aus, über die die Magnetfelder der Magnetfeldquellen 110 und der Spulen 170 miteinander in Wechselwirkung treten.

Bei dem in Fig. 2 gezeigten Ausführungsbeispiel eines Lagers 200 sind so die Magnetfeldquellen 110 an dem Innenring 280, die Spulen 170 an dem Außenring 290 angeordnet und bilden so einen Direktantrieb für das Rotorblatt 220 unter Umgehung und Vermeidung eines Getriebes. Selbstverständlich kann bei anderen Ausführungsbeispielen auch die Rolle des ersten Lagerrings 230 und des zweiten Lagerrings 240 hinsichtlich ihrer Ausprägung als Innenring und Außenring vertauscht werden. In einem solchen Fall würde der Innenring 280 der zweite Lagerring 240 und dem Rotorblatt 220 zugewandt sein, während der Außenring 290 der erste Lagerring 230 und dem Rotor 210 zugewandt wäre.

Auch wenn in Fig. 2 das Lager 200 gemäß einem Ausführungsbeispiel als ein einreihiges Kugellager gezeigt ist, sind Ausführungsbeispiele bei weitem nicht auf diesen Typ von Lager beschränkt. So können entsprechende Lager 200 beispielsweise als zwei- oder mehrreihige Lager ausgeführt werden. Auch können andere Wälzkörper 250 als Kugeln verwendet werden. So können beispielsweise ebenso tonnen-, zylinder-, nadel- oder kegelförmige Wälzkörper als Wälzkörper 250 verwendet werden. Auch können Ausführungsbeispiele auf Basis von Schrägkugellagern, beispielsweise Vierpunktkugellagern umgesetzt werden. Aber auch als Gleitlager können Lager 200 gemäß einem Ausführungsbeispiel implementiert werden.

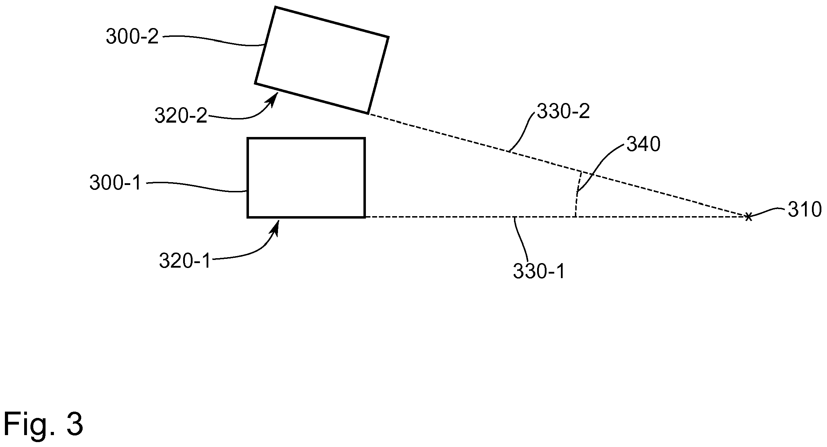

Bevor im Zusammenhang mit Fig. 4 eine Aufsicht auf ein Lager gemäß einem Ausführungsbeispiel näher erläutert und beschrieben wird, soll zunächst im Zusammenhang mit Fig. 3 erläutert werden, was unter einem Winkel zu verstehen ist, unter dem zwei benachbarte Objekte bezogen auf einen Mittelpunkt angeordnet sind.

So zeigt Fig. 3 ein erstes Objekt 300-1 und ein zweites Objekt 300-2, in die benachbart zueinander angeordnet sind. Wie bereits zuvor erläutert wurde, bedeutet dies, das zwischen diesen beiden Objekten 301 weiteres gleichartiges oder ähnliches Objekt 300 angeordnet ist. Die Objekte 300 sind ferner auf einen Mittelpunkt 310 ausgerichtet, der in Figur bei mit einem "X" gekennzeichnet ist. Die Objekte 300 weisen entsprechend jeweils eine Vorzugrichtung 320-1 und 320-2 auf, bei denen es sich beispielsweise um eine Außenkante, eine Magnetisierung, oder eine andere charakteristische Ausrichtung des betreffenden Objekts 300 handelt.

Die Ausrichtung der Objekte 300 auf den Mittelpunkt 310 bedeutet in diesem Fall, dass ihre Vorzugsrichtungen 320 auf den gemeinsamen Mittelpunkt 310 hin ausgerichtet sind. Entsprechend verlaufen Verbindungsgeraden 330-1 und 330-2, die den Mittelpunkt 310 mit dem jeweiligen Objekt 300 verbinden, parallel zu den Vorzugsrichtungen 320 der beiden Objekte 300.

Bei dem in Fig. 3 gezeigten Fall liegt dies daran, dass die Objekte 300 jeweils gerade eine entsprechende Vorzugsrichtung 320 aufweisen, die auf den gemeinsamen Mittelpunkt 310 hin zulaufen. Bei anderen Fällen, in denen eine entsprechende Vorzugsrichtungen 320 zwar den Objekten 300 zugeordnet werden kann, diese jedoch nicht auf den Mittelpunkt 310 ausgerichtet sind, schließen die Verbindungsgraden 330, die den Mittelpunkt einer zehn und das entsprechende Objekt 300 verbinden, mit den Vorzugsrichtungen 320 der entsprechenden Objekte einen für alle beteiligten Objekte 300 gleichen Winkel ein. Der zuerst genannte Fall stellt also einen Spezialfall des allgemeineren, zweiten Falls dar, bei dem der entsprechende Winkel 0° beträgt.

Bei den Objekten 300 kann es sich beispielsweise um Spulen 170 oder auch um Magnetfeldquellen 110 handeln. Je nachdem, wie die entsprechenden Objekte 300 implementiert sind, können entsprechende Vorzugsrichtungen 320 beispielsweise durch ihre geometrischen Ausgestaltung, also beispielsweise durch die äußere Form, oder aber auch durch funktionale Merkmale gegeben sein. So kann beispielsweise im Falle einer Magnetfeldquelle 110 eine Magnetisierung oder eines von der Magnetfeldquelle erzeugtes oder erzeugte bares Magnetfeld die Vorzugsrichtungen 320 darstellen. In diesem Zusammenhang bleiben gegebenenfalls durch alternierende Polarisierung hervorgerufene Winkel (Winkel von etwa 180°) unberücksichtigt. Ebenso kann im Falle einer Spule 170 ein durch diese erzeugtes oder erzeugbares Magnetfeld als Vorzugsrichtungen 320 herangezogen werden. Je nach konkreter Implementierung bleiben entsprechend auch hier Winkel, die auf eine Verschaltung und/oder eine Wicklungsorientierung zurückzuführen sind (Winkel von etwa 180°) unberücksichtigt. Alternativ oder ergänzend kann hier selbstverständlich ebenso eine geometrische Ausgestaltung der Spulen 170, beispielsweise eine Flächennormale, die durch die Spulen Wicklungen gegeben ist, herangezogen werden.

Der zuvor genannte Winkel ist dann der Winkel 340, den die beteiligten Verbindungsgeraden 330 miteinander einschließen. Wie bereits zuvor erwähnt wurde, wird in diesem Zusammenhang unter einem Mittelpunkt 310 ein - beliebiger, beispielsweise in einer Ebene senkrecht zu den betreffenden Strukturen angeordneter - Punkt auf einer Achse oder Rotationsachse eines Lagers bei 100 gemäß einem Ausführungsbeispiel oder aber auf einer Symmetrieachse oder Rotationsachse eines Lagerrings 230, 240 verstanden.

Fig. 4 zeigt eine Aufsicht auf ein Lager 200 gemäß einem Ausführungsbeispiel mit einem ersten Lagerring 230, bei dem es sich - abweichend von dem in Fig. 2 gezeigten Lager 200 - um einen Außenring 290 handelt. Entsprechend ist ein zweiter Lagerring 240 als Innenring 280 des Lagers 200 ausgebildet. Mit dem ersten Lagerring 230 ist eine Mehrzahl 350 von Magnetfeldquellen 110 mechanisch verbunden. Die Magnetfeldquellen 110 sind entlang wenigstens eines Teils seines Umfangs des ersten Lagerrings 230 benachbart zueinander angeordnet, wobei zwei benachbart zueinander angeordnete Magnetfeldquellen 110 entsprechend ein Magnetfeld mit alternierender Polarität erzeugen. In Fig. 4 ist dies durch eine Darstellung der Magnetfeldquellen 110 in Schwarz bzw. Weiß dargestellt. Die beiden in Fig. 4 mit einem Bezugszeichen versehenen Magnetfeldquellen 110-1 und 110-2 sind so entsprechend angeordnet, wie dies bereits zuvor im Zusammenhang mit Fig. 1 beschrieben wurde.

Die Mehrzahl 350 von Magnetfeldquellen 110 ist hierbei in einem vorbestimmten Winkelbereich 360 angeordnet, an denen sich ein weiterer vorbestimmter Winkelbereich 370 anschließt, in dem keine Magnetfeldquellen 110 angeordnet sind. Anders ausgedrückt ist der weitere vorbestimmte Winkelbereich 370 frei von Magnetfeldquellen. Bei dem in Fig. 4 gezeigten Ausführungsbeispiel eines Lagers 200 erstreckt sich der vorbestimmte Winkelbereich 360 über etwa 90°. Da das Lager 200 aus Fig. 4 genau eine Mehrzahl von Magnetfeldquellen 110 aufweist, erstreckt sich entsprechend der weitere vorbestimmte Winkelbereich 370 über etwa 270°. Bei anderen Ausführungsbeispielen eines Lagers 200 kann der vorbestimmte Winkelbereich auch kleiner oder auch größer ausgeführt sein. Bei vielen Ausführungsbeispielen ist es jedoch sinnvoll, einen vorbestimmten Winkelbereich zu implementieren, der wenigstens 75° umfasst.

Das Lager 200 weist ferner eine Gruppe 190 von Spulen 170 auf, von denen zur Vereinfachung der Darstellung in Fig. 4 lediglich eine mit einem Bezugszeichen versehen ist. Die Spulen 170 der Gruppe 190 von Spulen 170 sind hierbei auf einem gemeinsamen Joch 140 angeordnet, auf dem nur die Spulen 170 der Gruppe 190 angeordnet sind. Die Gruppe 190 von Spulen 170 und die Mehrzahl 350 von Magnetfeldquellen 110 bilden einen Linearmotor 100, wie dieser im Zusammenhang mit Fig. 1 beschrieben wurde.

Die Gruppe 190 von Spulen 170 erstreckt sich hierbei über einen Winkelbereich 380 von etwa 22°. Selbstverständlich kann sich bei anderen Ausführungsbeispielen die Gruppe 190 von Spulen 170 auch über einen von etwa 22° abweichenden Winkelbereich 380 erstrecken. Dieser kann größer oder auch kleiner sein. Um eine Überlappung im Winkelbereich zwischen den Magnetfeldquellen 110 und den Spulen 170 zu ermöglichen, weist so das in Fig. 4 dargestellte Lager einen effektiven Verfahrweg von etwa 68° (= 90° - 22°) auf. Anders ausgedrückt ergibt sich der effektive Verfahrweges als Differenz des vorbestimmten Winkelbereichs 360 und des Winkelbereichs 380, über den sich die Spulen 170 der Gruppe 190 von Spulen an 170 erstrecken.

Um beispielsweise einen Verfahrweg von 90° zu ermöglichen, kann es ratsam sein, wie Magnetfeldquellen 110 über einen vorbestimmten Winkelbereich 360 anzuordnen, der einer Summe von 90° und einem kleinsten Winkelbereich 380 entspricht, in dem die Gruppe 190 von Spulen 170 bezogen auf einen Mittelpunkt des 310 des zweiten Lagerrings 240 angeordnet ist. Der Mittelpunkt 310 des zweiten Lagerrings 240 fällt hierbei mit dem Mittelpunkt des ersten Lagerrings 230 zusammen. Anders ausgedrückt kann es ratsam sein, die Mehrzahl 350 von Magnetfeldquellen 110 über einen vorbestimmten Winkelbereich 360 anzuordnen, der wenigstens eine Summe des beabsichtigten Verfahrwegs (in Grad) und des Winkelbereichs 380 umfasst, über denen sich die Gruppe 190 von Spulen 170 erstreckt.

Um die Anzahl der Magnetfeldquellen 110 gegebenenfalls reduzieren zu können, kann es daher sinnvoll sein, den Winkelbereich 380 auf höchstens 30°, höchstens 25°, höchstens 20° oder höchstens 15° zu beschränken. So erstreckt sich bei einem Ausführungsbeispiel eines Lagers 200 die Gruppe 190 von Spulen 170 über einen Winkelbereich 380 zwischen 10° und 15°.

So schließt sich bei vielen Ausführungsbeispielen eines Lagers 200 an den Winkelbereich 380 des zweiten Lagerrings 240, in dem eine Gruppe 190 von Spulen 170 vollständig angeordnet ist, unmittelbar ein weiterer Winkelbereich 400 des zweiten Lagerrings 240 an, in dem keine Spulen angeordnet sind, der also frei von Spulen ist. Dieser weitere Winkelbereich 400 des zweiten Lagerrings 240 erstreckt sich häufig wenigstens über 30°, wenigstens über 45°, wenigstens über 75°, wenigstens 90°, wenigstens 100° oder wenigstens 120°. Der weitere Winkelbereich 400, in dem keine Spulen an dem zweiten Lagerring 240 angeordnet sind, der also frei von Spulen ist, erstreckt sich so bei diesem Ausführungsbeispiel eines Lagers 200 über mehr als 330°.

Bei dem in Fig. 4 gezeigten Ausführungsbeispiel eines Lagers 200 umfasst der weitere vorbestimmte Winkelbereich 300, in dem keine Magnetfeldquellen angeordnet sind, mehr als ein Zwölffaches des Winkelbereichs 380, indem die Gruppe 190 von Spulen 170 umfasst ist. Bei anderen Ausführungsbeispielen kann auch ein anderes vielfaches, beispielsweise ein Einfaches, ein Zweifaches oder ein Dreifaches implementiert werden. Selbstverständlich ist dieses Verhältnis nicht auf ganzzahligen Verhältnisse beschränkt. Durch eine Reduzierung dieses Verhältnisses kann gegebenenfalls ein weiterer Linearmotor 100 implementiert werden.

Der Winkelbereich 380 wird hierbei typischerweise als der kleinste Winkelbereich definiert, in dem die Gruppe 190 von Spulen 170 vollständig umfasst werden kann.

Wie bereits zuvor im Zusammenhang mit den Fig. 1 und 2 beschrieben wurde, können die Magnetfeldquellen 110 jeweils einen Dauermagneten oder Permanentmagneten, beispielsweise einen NdFeB-Magneten, oder auch eine Spule umfassen. Selbstverständlich können Magnetfeldquellen 110 ebenso eine Kombination beider Techniken darstellen, bei denen beispielsweise mithilfe einer Spule ein von einem Permanentmagneten erzeugte Magnetfeld verstärkt wird.

Um einerseits ein gutes Ansprechverhalten des Linearmotors 100 mit seinen Magnetfeldquellen 110 und seinen Spulen 170 und andererseits auch eine gute Drehmomententwicklung bzw. Kraftentfaltung zu ermöglichen, ist die Gruppe 190 von Spulen 170 derart angeordnet, dass ein Verhältnis eines Winkels, unter dem zwei benachbarte Spulen 170 der Gruppe 190 von Spulen 170 bezogen auf den Mittelpunkt 310 angeordnet sind, zu einem weiteren Winkel, unter dem zwei benachbarte Magnetfeldquellen 110 (beispielsweise die Magnetfeldquellen 110-1 und 110-2) bezogen auf den Mittelpunkt 310 angeordnet sind, zwischen 0,6 und 0,95 oder zwischen 1,05 und 1,4 liegt. Bei anderen Ausführungsbeispielen kann das Verhältnis ebenfalls zwischen 0,8 und 0,95 bzw. zwischen 1,05 und 1,25, oder aber auch zwischen 0,85 und 0,95 oder zwischen 1,05 und 1,15 liegen. Selbstverständlich können aber auch andere Verhältnisse bei Ausführungsbeispielen implementiert werden. Dies kann beispielsweise dann interessant sein, wenn der Linearmotor 100 als Schrittmotor ausgeführt wird.

Fig. 4 zeigt so ein Lager 200 gemäß einem Ausführungsbeispiel, bei dem die Magnetfeldquellen 110 an dem Außenring 290 angebracht sind, um den magnetischen Fluss zu leiten. Spulen 170 sind entsprechend an dem Innenring 280 angebracht durch ein Anlegen eines Stroms an die Spulen 170 wird so eine Verdrehung bzw. Rotation des Lagers 200 bewirkt. Die Magnetfeldquellen 110 können hierbei durch Permanentmagneten und/oder Elektromagneten, also Spulen gebildet werden oder diese umfassen.

Fig. 5 zeigt ein weiteres Ausführungsbeispiel eines Lagers 200, welches sich von dem in Fig. 4 gezeigten Lager 200 im Wesentlichen dadurch unterscheidet, dass dieses nunmehr zwei Linearmotoren 100-1 und 100-2 umfasst. Bei dem in Fig. 5 gezeigten Ausführungsbeispiel sind die beiden Linearmotoren 100-1,100-2 identisch ausgeführt, jedoch um 180° bezogen auf den Mittelpunkt 310 gedreht angeordnet.

So weist der erste Linearmotors 100-1 eine erste Gruppe 190-1 von Spulen 100 sich auf, die - analog zu dem in Fig. 4 gezeigten Ausführungsbeispiel - an dem Innenring 280 befestigt sind. Entsprechend ist wiederum die Mehrzahl 350 von Magnetfeldquellen 100 mit dem Außenring 290 verbunden.

Allerdings weist das in Fig. 5 gezeigte Lager 200 ferner einen zweiten Linearmotors 100-2 auf. Auch dieser weist aufgrund seiner identischen Ausfertigung eine Gruppe 190-2 von Spulen 170 auf, die ebenfalls mit dem Innenring 280, also dem zweiten Lagerring 240 verbunden sind. Darüber hinaus weist der zweite Linearmotors 100-2 jedoch ebenso eine weitere Mehrzahl 390 von Magnetfeldquellen 110 auf. Die weitere Mehrzahl 390 von Magnetfeldquellen 110 entspricht hierbei hinsichtlich Ausgestaltung und Orientierung der Mehrzahl 350 von Magnetfeldquellen 110 des Linearmotors 100-1.

Bei anderen Ausführungsbeispielen eines Lagers 200 kann die weitere Mehrzahl 390 von Magnetfeldquellen 110 jedoch auch abweichende implementiert sein. Unabhängig hiervon weist diese jedoch ebenso entlang eines Teils des Umfangs des ersten Lagerrings 230 benachbart zueinander angeordnete Magnetfeldquellen 110 auf, wobei die Magnetfeldquellen 110 der weiteren Mehrzahl 390 von Magnetfeldquellen ebenso ausgebildet sind, dass jeweils zwei benachbart zueinander angeordnete Magnetfeldquellen 110 ein Magnetfeld mit alternierender Polarität erzeugen. Bei anderen Ausführungsbeispielen können so die Linearmotoren 100, und damit die Gruppen 190 von Spulen 170 und die Mehrzahlen 350, 390 von Magnetfeldquellen 110 auch unterschiedlich ausgeführt und implementiert sein.

Die beiden Gruppen 190-1 und 190-2 von Spulen 170 sind hierbei voneinander beabstandet angeordnet. Genauer gesagt weist so der zweite Lagerring 240 einen weiteren Winkelbereich 400 auf, der typischerweise wenigstens als 30° umfasst, in dem keine Spulen 170 mit dem zweiten Lagerring 240 verbunden sind.

Bei anderen Ausführungsbeispielen können jedoch auch mehr als die zuvor genannte Anzahl von Linearmotoren 100 mit einer entsprechend höheren Anzahl von Gruppen 190 von Spulen 170 und einer entsprechend höheren Anzahl von Mehrzahlen 350, 390 von Magnetfeldquellen 110 implementiert werden. Je nach konkreter Implementierung kann im Falle eines beabsichtigten Verfahrweges von wenigstens 90° die Zahl der implementiert waren Linearmotoren 100 jedoch auf maximal drei beschränkt sein. In diesem Fall können die Gruppen 190 von Spulen 170 und/oder die Mehrzahlen 350, 390 von Magnetfeldquellen 110 beispielsweise jeweils um 120° um den Mittelpunkt 310 verdreht zueinander implementiert werden.

Anders ausgedrückt sind nunmehr bei diesem Ausführungsbeispiel die Linearmotoren 100, die auch als Linearantriebe bezeichnet werden, an beiden Seiten des Lagers 200 angebracht. Hierdurch kann eine Erhöhung des Drehmoments bzw. der Kräfte erzeugt werden. Dies kann beispielsweise dann ratsam sein, wenn aufgrund konstruktiver Bedingungen ein einzelner Linearmotor 100 nicht mehr zur Bereitstellung eines entsprechenden Drehmoments ausweichen könnte.

Ausführungsbeispiele eines Lagers 200 ermöglichen so eine Anstellwinkellagerung ein Rotorblatt einer Windkraftanlage mit einem auf einen Linearmotorkonzept beruhenden Direktantrieb.

Ausführungsbeispiel eines Lagers 200 können so eine einfachere Herstellung eines Lagers und/oder bauraumeinsparendere Lagerung und/oder - aufgrund des eingesparten Getriebes - eine spielärmere Anstellwinkeleinstellung eines Rotorblatts einer Windkraftanlage ermöglichen. Ausführungsbeispiele eines Lagers können so im Zusammenhang mit Windkraftanlagen eingesetzt werden, die ein oder mehrere Rotorblätter 220 umfassen. Lager 200 gemäß einem Ausführungsbeispiel können jedoch auch bei anderen Anlagen und Maschinen zum Einsatz gebracht werden, bei denen eine ähnliche Nachführung eines Anstellwinkels oder eines ähnlichen Winkels ratsam ist.

Die in der vorstehenden Beschreibung, den Ansprüchen und den Zeichnungen offenbarten Merkmale können sowohl einzeln als auch in beliebiger Kombination für die Verwirklichung von Ausführungsbeispielen in ihren verschiedenen Ausgestaltungen von Bedeutung sein und - soweit sich nicht aus der Beschreibung etwas anderes ergibt - beliebig miteinander kombiniert werden.

## Patentansprüche

1. Lager (200) zum Einstellen eines Anstellwinkels eines Rotorblatts (220) einer Windkraftanlage mit folgenden Merkmalen:
einem ersten Lagerring (230) und einem zweiten Lagerring (240),
wobei der erste (230) und der zweite Lagerring (240) zueinander drehbar sind;
wobei der erste Lagerring (230) als Translator eines Linearmotors (100) eine Mehrzahl (350) von entlang eines Teils seines Umfangs benachbart zueinander angeordneten Magnetfeldquellen (110) umfasst;
wobei die Magnetfeldquellen (110) so ausgebildet sind, dass jeweils zwei benachbart zueinander angeordnete Magnetfeldquellen (110) ein Magnetfeld mit alternierender Polarität erzeugen; **dadurch gekennzeichnet, dass** die Mehrzahl (350) von Magnetfeldquellen (110) in einem vorbestimmten Winkelbereich (360) bezogen auf einen Mittelpunkt (310) des ersten Lagerrings (230) entlang seines Umfangs angeordnet ist, an den sich unmittelbar ein weiterer vorbestimmter Winkelbereich (370) anschließt, in dem keine Magnetfeldquellen angeordnet sind; und
wobei der zweite Lagerring (240) als Stator des Linearmotors (100) eine Gruppe (190) von wenigstens zwei entlang eines Teils seines Umfangs benachbart zueinander angeordneten Spulen (170) umfasst,
wobei die Spulen (170) der Gruppe (190) von Spulen (170) auf einem gemeinsamen Joch (140) angeordnet sind.

2. Lager (200) nach Anspruch 1, bei dem der vorbestimmte Winkelbereich (360) wenigstens 75° umfasst.

3. Lager (200) nach einem der vorhergehenden Ansprüche, bei dem der vorbestimmte Winkelbereich (360) einen Winkelbereich umfasst, der einer Summe von wenigstens 90°, beispielsweise 100° oder 120°, und einem kleinsten Winkelbereich (380) entspricht, in dem die Gruppe (190) von Spulen (170) bezogen auf einen Mittelpunkt (310) des zweiten Lagerrings (240) angeordnet ist.

4. Lager (200) nach einem der vorhergehenden Ansprüche, bei dem der weitere vorbestimmte Winkelbereich (370) wenigstens einem Einfachen eines kleinsten Winkelbereichs (380) entspricht, in dem die Gruppe (190) von Spulen (170) bezogen auf einen Mittelpunkt (310) des zweiten Lagerrings (240) angeordnet ist.

5. Lager (200) nach einem der vorhergehenden Ansprüche, bei dem die Gruppe (190) von Spulen (170) derart angeordnet ist, dass ein Verhältnis eines Winkels, unter dem zwei benachbarte Spulen (170) der Gruppe (190) von Spulen (170) bezogen auf einen Mittelpunkt (310) des zweiten Lagerrings (240) angeordnet sind, zu einem weiteren Winkel, unter dem zwei benachbarte Magnetfeldquellen (110) bezogen auf einen Mittelpunkt (310) des ersten Lagerrings (230) angeordnet sind, zwischen 0,6 und 0,95 oder zwischen 1,05 und 1,4 liegt.

6. Lager (200) nach einem der vorhergehenden Ansprüche, das eine, beispielsweise regelmäßig, entlang des ersten Lagerrings angeordnete Mehrzahl von Gruppen (190) von Spulen (170) aufweist, wobei jeweils zwischen zwei benachbarten Gruppen (190) von Spulen (170) in einem Winkelbereich (400) von wenigstens 30° entlang des Umfangs des zweiten Lagerrings (240) keine Spulen angeordnet sind, wobei der erste Lagerring (230) eine weitere Mehrzahl (390) von entlang eines Teils seines Umfangs benachbart zueinander angeordneten Magnetfeldquellen (110) umfasst, wobei die Magnetfeldquellen (110) der weiteren Mehrzahl (390) von Magnetfeldquellen (110) so ausgebildet sind, dass jeweils zwei benachbart zueinander angeordnete Magnetfeldquellen (110) ein Magnetfeld mit alternierender Polarität erzeugen.

7. Lager (200) nach einem der vorhergehenden Ansprüche, bei dem die Magnetfeldquellen (110) der Mehrzahl von Magnetfeldquellen (110) jeweils einen Dauermagneten, beispielsweise einen NdFeB-Permanentmagneten, oder eine Spule umfassen.

8. Lager (200) nach einem der vorhergehenden Ansprüche, bei dem der erste Lagerring (230) ein Innenring (280) des Lagers (200) und der zweite Lagerring (240) ein Außenring (290) des Lagers (200) ist.

9. Windkraftanlage mit folgenden Merkmalen:
einem Rotor (210) und einem Rotorblatt (220); und
einem Lager (200) gemäß einem der Ansprüche 1 bis 8, das zwischen dem Rotor (210) und dem Rotorblatt (220) so angeordnet ist, dass das Rotorblatt (220) mit dem ersten Lagerring (230) und der Rotor (210) mit dem zweiten Lagerring (240) jeweils mechanisch verdrehfest miteinander verbunden sind, um eine Änderung eines Anstellwinkels des Rotorblatts (220) zu ermöglichen.

## Claims

1. Bearing (200) for setting an angle of attack of a rotor blade (220) of a wind power plant, with the following features:
a first bearing ring (230) and a second bearing ring (240),
the first bearing ring (230) and the second bearing ring (240) being rotatable in relation to one another;
the first bearing ring (230), as a translator of a linear motor (100), comprising a plurality (350) of magnetic field sources (110) arranged adjacent to one another along part of its circumference;
the magnetic field sources (110) being formed such that two magnetic field sources (110) respectively arranged adjacent to one another generate a magnetic field with alternating polarity;
**characterized in that** the plurality (350) of magnetic field sources (110) is arranged in a predetermined angular region (360) with respect to a centre point (310) of the first bearing ring (230) along its circumference that is directly adjoined by a further predetermined angular region (370) in which no magnetic field sources are arranged; and
the second bearing ring (240), as a stator of the linear motor (100), comprising a group (190) of at least two coils (170) arranged adjacent to one another along part of its circumference,
the coils (170) of the group (190) of coils (170) being arranged on a common yoke (140).

2. Bearing (200) according to Claim 1, in which the predetermined angular region (360) comprises at least 75°.

3. Bearing (200) according to one of the preceding claims, in which the predetermined angular region (360) comprises an angular region which corresponds to a sum of at least 90°, for example 100° or 120°, and a smallest angular region (380) in which the group (190) of coils (170) is arranged with respect to a centre point (310) of the second bearing ring (240) .

4. Bearing (200) according to one of the preceding claims, in which the further predetermined angular region (370) corresponds to at least one times a smallest angular region (380) in which the group (190) of coils (170) is arranged with respect to a centre point (310) of the second bearing ring (240) .

5. Bearing (200) according to one of the preceding claims, in which the group (190) of coils (170) is arranged in such a way that a ratio of an angle at which two adjacent coils (170) of the group (190) of coils (170) are arranged with respect to a centre point (310) of the second bearing ring (240) to a further angle at which two adjacent magnetic field sources (110) are arranged with respect to a centre point (310) of the first bearing ring (230) lies between 0.6 and 0.95 or between 1.05 and 1.4.

6. Bearing (200) according to one of the preceding claims, which has a plurality of groups (190) of coils (170) arranged, for example regularly, along the first bearing ring, no coils being arranged respectively between two adjacent groups (190) of coils (170) in an angular region (400) of at least 30° along the circumference of the second bearing ring (240), the first bearing ring (230) comprising a further plurality (390) of magnetic field sources (110) arranged adjacent to one another along part of its circumference, the magnetic field sources (110) of the further plurality (390) of magnetic field sources (110) being formed such that two magnetic field sources (110) respectively arranged adjacent to one another generate a magnetic field with alternating polarity.

7. Bearing (200) according to one of the preceding claims, in which the magnetic field sources (110) of the plurality of magnetic field sources (110) respectively comprise a permanent magnet, for example an NdFeB permanent magnet, or a coil.

8. Bearing (200) according to one of the preceding claims, in which the first bearing ring (230) is an inner ring (280) of the bearing (200) and the second bearing ring (240) is an outer ring (290) of the bearing (200).

9. Wind power plant with the following features:
a rotor (210) and a rotor blade (220); and
a bearing (200) according to one of Claims 1 to 8, which is arranged between the rotor (210) and the rotor blade (220) such that the rotor blade (220) is connected to the first bearing ring (230) and the rotor (210) is connected to the second bearing ring (240) mechanically fixed so as to rotate respectively with one another, in order to make it possible for an angle of attack of the rotor blade (210) to be adjusted.

## Revendications

1. Palier (200) pour le réglage d'un angle d'attaque d'une pale de rotor (220) d'une éolienne, présentant les caractéristiques suivantes:
une première bague de palier (230) et une deuxième bague de palier (240),
dans lequel la première (230) et la deuxième (240) bagues de palier peuvent tourner l'une par rapport à l'autre ;
dans lequel la première bague de palier (230) comprend, comme translateur d'un moteur linéaire (100), une multiplicité (350) de sources de champ magnétique (110) disposées à proximité l'une de l'autre le long d'une partie de son pourtour;
dans lequel les sources de champ magnétique (110) sont configurées de telle manière que deux sources de champ magnétique (110) disposées à proximité l'une de l'autre produisent respectivement un champ magnétique de polarité alternée;
**caractérisé en ce que**
la multiplicité (350) de sources de champ magnétique (110) est disposée dans une plage angulaire prédéterminée (360) par rapport à un centre (310) de la première bague de palier (230) le long de sa circonférence, à laquelle se raccorde directement une plage angulaire prédéterminée supplémentaire (370), dans laquelle n'est disposée aucune source de champ magnétique; et
dans lequel la deuxième bague de palier (240) comprend, comme stator du moteur linéaire (100), un groupe (190) d'au moins deux bobines (170) disposées à proximité l'une de l'autre le long d'une partie de son pourtour,
les bobines (170) du groupe (190) de bobines (170) étant disposées sur une armature commune (140).

2. Palier (200) selon la revendication 1, dans lequel la plage angulaire (360) prédéterminée comprend au moins 75°.

3. Palier (200) selon l'une quelconque des revendications précédentes, dans lequel la plage angulaire prédéterminée (360) comprend une plage angulaire qui correspond à une somme d'au moins 90°, par exemple de 100° ou de 120°, et à une plage angulaire minimale (380) dans laquelle le groupe (190) de bobines (170) est disposé par rapport à un centre (310) de la deuxième bague de palier (240).

4. Palier (200) selon l'une quelconque des revendications précédentes, dans lequel l'autre plage angulaire (370) prédéterminée correspond à au moins une fois une plage angulaire minimale (380) dans laquelle le groupe (190) de bobines (170) est disposé par rapport à un centre (310) de la deuxième bague de palier (240).

5. Palier (200) selon l'une quelconque des revendications précédentes, dans lequel le groupe (190) de bobines (170) est disposé de telle manière qu'un rapport entre un angle, sous lequel deux bobines voisines (170) du groupe (190) de bobines (170) sont disposées par rapport à un point central (310) de la deuxième bague de palier (240), et un autre angle, sous lequel deux sources de champ magnétique voisines (110) sont disposées par rapport à un point central (310) de la première bague de palier (230), soit compris entre 0,6 et 0,95 ou entre 1,05 et 1,4.

6. Palier (200) selon l'une quelconque des revendications précédentes, qui présente une multiplicité de groupes (190) de bobines (170), disposés par exemple régulièrement le long de la première bague de palier, dans lequel aucune bobine n'est disposée respectivement entre deux groupes voisins (190) de bobines (170) dans une plage angulaire (400) d'au moins 30° le long du pourtour de la deuxième bague de palier (240), dans lequel la première bague de palier (230) comprend une autre multiplicité (390) de sources de champ magnétique (110) disposées à proximité les unes des autres le long d'une partie de son pourtour, dans lequel les sources de champ magnétique (110) de l'autre multiplicité (390) de sources de champ magnétique (110) sont configurées de telle manière que deux sources de champ magnétique (110) disposées à proximité l'une de l'autre produisent respectivement un champ magnétique de polarité alternée.

7. Palier (200) selon l'une quelconque des revendications précédentes, dans lequel les sources de champ magnétique (110) de la multiplicité de sources de champ magnétique (110) comprennent respectivement un aimant permanent, par exemple un aimant permanent NdFeB, ou une bobine.

8. Palier (200) selon l'une quelconque des revendications précédentes, dans lequel la première bague de palier (230) est une bague intérieure (280) du palier (200) et la deuxième bague de palier (240) est une bague extérieure (290) du palier (200).

9. Eolienne présentant les caractéristiques suivantes:
un rotor (210) et une pale de rotor (220), avec
un palier (200) selon l'une quelconque des revendications 1 à 8, qui est disposé entre le rotor (210) et la pale de rotor (220), de telle manière que la pale de rotor (220) avec la première bague de palier (230) et le rotor (210) avec la deuxième bague de palier (240) soient respectivement assemblés l'un à l'autre mécaniquement de façon solidaire en rotation, afin de permettre un changement d'un angle d'attaque de la pale de rotor (220).
